# EUROPÄISCHE PATENTSCHRIFT

(11) **EP 4 103 862 B1**
(45) Veröffentlichungstag und Bekanntmachung des Hinweises auf die Patenterteilung: **10.04.2024**
(21) Anmeldenummer: 21706833.7
(22) Anmeldetag: 01.02.2021
(51) Int. Cl.: F16H 25/20, F16H 25/22

(54) **PLANETENWÄLZGEWINDETRIEB**
PLANETARY ROLLER SCREW
VIS À ROULEAUX SATELLITES

(30) Priorität: 11.02.2020 DE 102020103422
(43) Veröffentlichungstag der Anmeldung: 21.12.2022
(73) Patentinhaber: Schaeffler Technologies AG & Co. KG, 91074 Herzogenaurach (DE)
(72) Erfinder: WEIS, Sebastian, 66904 Brücken (DE); HEIER, Waldemar, 66424 Homburg (DE); KELLER, Peter, 66892 Bruchmühlbach-Miesau (DE)
(86) Internationale Anmeldenummer: PCT/DE2021/100089
(87) Internationale Veröffentlichungsnummer: WO 2021/160211

(56) Entgegenhaltungen:
- DE-A1-102017 124 386
- DE-A1-102018 116 867
- DE-A1-102019 103 384
- DE-A1-102019 103 385

## Beschreibung

Die vorliegende Erfindung betrifft einen Planetenwälzgewindetrieb, der eine rotatorische in eine translatorische Bewegung umwandelt. Die Erfindung betrifft auch einen Aktuator einer Vorderachs- sowie einer Hinterachslenkung eines Kraftfahrzeuges, mit einem derartigen Planetenwälzgewindetrieb.

Aus DE 10 2018 116 867 A1 ist ein Planetenwälzgewindetrieb nach den Merkmalen des Oberbegriffs des Anspruchs 1 bekannt geworden. Dieser Planetenwälzgewindetrieb ist mit einer auf einer Gewindespindel angeordneten Mutter versehen, die quer zur Spindelachse in zwei Mutterteile geteilt ist, und mit zwischen der Gewindespindel und der Mutter angeordneten Planetenrollen, die mit ihrem planetenseitigen Rillenprofil einerseits mit einem mutterseitigen Rillenprofil und andererseits mit einem Gewindeprofil der Gewindespindel kämmen. Dieser Planetenwälzgewindetrieb weist ferner einen Planetenrollenträger auf, in dessen über den Umfang verteilt angeordneten Taschen die Planetenrollen um ihre Planetenrollenachse drehbar gelagert sind.

Der Planetenrollenträger umgreift die Mutter, deren Mutterteile mittels unterschiedlicher technischer Maßnahmen vorgespannt werden, um eine Spielfreiheit im Eingriff mit den Planetenrollen zu ermöglichen. In dieser Druckschrift wird vorgeschlagen, zwischen die Mutterteile en Distanzstück einzubauen. Weiter wird alternativ vorgeschlagen, die Mutterteile in zwei Schraubhülsen einzusetzen, an denen die Mutterteile axial abgestützt sind und die miteinander soweit verschraubt werden, bis die erwähnte Spielfreiheit eingestellt ist.

Diese Maßnahmen sind aufwändig und erfordern entsprechenden Bauraumbedarf innerhalb des Planetenrollenträgers. Insbesondere in automobilen Anwendungen besteht jedoch regelmäßig das Bedürfnis nach kostengünstigen bauraumsparenden Planetenwälzgewindetrieben, insbesondere, wenn diese in Aktuatoren einer Hinterachslenkung oder einer Vorderachslenkung verwendet werden.

Der vorliegenden Erfindung lag die Aufgabe zugrunde, einen Planetenwälzgewindetrieb gemäß dem Oberbegriff des Anspruchs 1 anzugeben, der einfach herstellbar ist und der einen geringeren Bauraumbedarf hat.

Erfindungsgemäß wurde diese Aufgabe durch den Planetenwälzgewindetrieb gemäß Anspruch 1 gelöst.

Der Planetenwälzgewindetrieb ist mit einer auf einer Gewindespindel angeordneten, Mutter versehen, die quer zur Spindelachse in zwei Mutterteile axial geteilt ist. Die beiden Mutterteile sind axial hintereinander angeordnet. Ein axialer Abstand der beiden Mutterteile zueinander ist abgestimmt auf die Formgebung der Planetenrollen, mit denen die Mutterteile kämmen. Die beiden Mutterteile müssen nicht durch weitere Bauteile miteinander verbunden sein, sieht man von den Planetenrollen ab, die mit den Mutterteilen kämmen. Diese Mutterteile können einander zugewandte hülsenartige Fortsätze aufweisen, die gleichachsig mit den Mutterteilen angeordnet sind und mit geringem radialen Spiel ineinandergreifen, also axial einander überlappen. Diese ineinandergreifenden Fortsätze sind in diesem Fall so bemessen, dass die Mutterteile radial zueinander ausgerichtet sind und ein definiertes Radialspiel oder eine definierte Passung miteinander aufweisen.

Zwischen der Gewindespindel und der Mutter sind über den Umfang verteilt Planetenrollen angeordnet, die einerseits mit den Mutterteilen und andererseits mit der Gewindespindel kämmen. Die Planetenrollen können jeweils ein mittleres Rillenprofil aufweisen, das mit einem Gewindeprofil der Gewindespindel kämmt, und die jeweils zu beiden Seiten des mittleren Rillenprofils gelegene äußere Rillenprofile aufweisen, deren eines äußeres Rillenprofil mit dem einen Mutterteil und deren anderes äußeres Rillenprofil mit dem anderen Mutterteil kämmt. Das mittlere Rillenprofil ist im Durchmesser größer als die benachbarten äußeren Rillenprofile.

Ferner ist ein auf der Gewindespindel angeordneter drehangetriebener Planetenrollenträger vorgesehen, in dessen über den Umfang verteilt angeordneten Taschen die Planeten in Umfangsrichtung auf Abstand gehalten und um ihre Planetenrollenachse drehbar gelagert sind. Der Planetenrollenträger kann Teil eines Riemenrades sein, das von einem Zahnriemen eines Riementriebs umschlungen ist. Der Zahnriemen kann von einem Elektromotor angetrieben sein. Unter dem Drehantrieb rotiert der Planetenträger um die Gewindespindel und die Planeten wälzen an der Gewindespindel und der Mutter ab und rotieren um ihre Längsachse in den Taschen des Planetenrollenträgers. Eine vollständige Umdrehung des Planetenrollenträgers entspricht einem Spindelvorschub, der seinem Betrag nach der Steigung des Gewindes des Gewindespindel entspricht. Dieser Typ Planetenwälzgewindetrieb ist demzufolge steigungstreu.

Der Planetenrollenträger kann zwei axial voneinander beabstandet angeordnete Trägerflansche sowie ein gleichachsig zu der Gewindespindel angeordnetes, die Mutter umgreifendes Antriebsrad oder eine Antriebshülse - bspw. ein Zahnriemenrad - aufweisen, das drehfest mit den beiden Trägerflanschen verbunden ist, wobei die beiden Trägerflansche axial verschieblich zueinander angeordnet sind. Einer der beiden Trägerflansche kann fest mit dem Antriebsrad verbunden sein, der andere Trägerflansch kann mittels eines Schiebesitzes mit dem Antriebsrad verbunden, der axiale Relativverschiebungen zwischen diesem Trägerflansch und dem Antriebastrad zulässt, und somit Relativverschiebungen zwischen den beiden Trägerflanschen. Die beiden Trägerflansche sind mit den Taschen zur Aufnahme der Planeten versehen.

Der Planetenwälzgewindetrieb weist ein Gehäuse auf, in dem die genannten Bauteile eingebaut sind. Das Gehäuse kann ein Aktuatorgehäuse sein. Wenn der Planetenwälzgewindetrieb Teil eines Aktuators einer Hinterachslenkung eines Kraftfahrzeuges ist, kann das Gehäuse mit zwei Durchführungen versehen sein, durch die eine Schubstange hindurchführt, wobei die Gewindespindel Teil dieser Schubstange ist. Das Gehäuse kann ein gestellfestes, offenes Bauteil sein, an dem die beweglichen Bauteile des Planetenwälzgewindetriebes gelagert sind.

Der Planetenrollenträger kann mittels innerer Stützlager und äußerer Stützlager gelagert sein. Das eine äußere Stützlager kann zwischen dem einen Mutterteil und dem Gehäuse und das andere äußere Stützlager kann zwischen dem anderen Mutterteil und dem Gehäuse angeordnet sein. Auf diese Weise kann der Planetenrollenträger in dem Gehäuse einwandfrei drehbar gelagert sein, wobei die axial verschieblich zueinander angeordneten Trägerflansche das Einstellen eines gewünschten axialen Lagerspiels oder einer gewünschten axialen Vorspannung vereinfachen.

Das eine innere Stützlager kann zwischen dem einen Mutterteil und dem einen Trägerflansch und das andere innere Stützlager kann zwischen dem anderen Mutterteil und dem anderen Trägerflansch angeordnet sein.

Diese Lageranordnung ist so gewählt, dass ein axiales Spiel des Planetenrollenträges in dem Gehäuse mittels einer Vorspanneinrichtung eingestellt werden kann bis hin zu einer gewünschten axialen Vorspannung. Im einfachsten Fall kann eine axiale Abstützfläche im gehäuseseitige Lagersitz für das eine äußere Stützlager einstellbar sein, so dass unter einer axialen Verlagerung dieser axialen Abstützfläche das Axialspiel sämtlicher beteiligten Bauteile zwischen den beiden äußeren Stützlagern eingestellt werden kann, bis hin zu einer gewünschten axialen Vorspannung.

Vorzugsweise sind die inneren Stützlager durch Axialwälzlager gebildet. Die Mutterteile können ohne radiale Belastung betrieben werden und lediglich die über die Gewindespindel eingeleiteten axialen Kräfte über die Stützlager in das Gehäuse einleiten.

Vorzugsweise sind die äußeren Stützlager durch Schrägwälzlager gebildet. Auf diese Weise werden vom Zahnriemen übertragene Zugkräfte als Radialkraft über das Schrägwälzlager in das Gehäuse übertragen. Wenn ein Schrägrollenlager mit zylindrischen Wälzkörpern eingesetzt werden, können die konisch geformten Laufbahnen dieses Schrägwälzlagers beispielsweise unter einem Winkel von ca 15 Grad zu einer quer zur Spindelachse angeordneten Ebene angeordnet sein. Auf diese Weise können einerseits große axiale Kräfte sowie andererseits radiale Kräfte übertragen werden.

Für den Fall der Schrägrollenlager als äußere Stützlager ist es vorteilhaft, wenn die Trägerflansche des Planetenrollenträgers an ihren voneinander abgewandten Stirnseiten jeweils mit einer konusförmig ausgebildeten Stützfläche für das Schrägwälzlager versehen sind. Diese eine Lagerscheibe des Schrägrollenlagers kann an dieser Stützfläche plan anliegen oder diese Stützfläche kann unmittelbar als Laufbahn für zylindrische oder kegelige Wälzkörper des Schrägrollenlagers dienen. Der Konuswinkel kann ca 15 Grad betragen, wie weiter oben bereits beschrieben wurde.

Die Vorspanneinrichtung ist vorgesehen zum Einstellen einer axialen Vorspannung zwischen dem Gehäuse und den Planetenrollen. Diese axiale Vorspannung wird von dem Gehäuse über die beiden Mutterteile in die Planetenrollen übertragen. Die in der beschriebenen Weise optional beidseits der Trägerflansche angeordneten Stützlager übertragen diese axiale Vorspannung. Unter dieser Vorspannung werden die Planetentrollen auf Druck belastet.

Im Gegensatz zu bekannten Vorspanneinrichtungen sind in dem Bauraum innerhalb des Planetenrollenrollenträgers keine besonderen Bauteile erforderlich, um diese Vorspannung aufzubauen. Es genügt, diese Vorspanneinrichtung zwischen das Gehäuse und den Planetenrollenträger einzubauen. Das bedeutet neben einer Reduzierung von Bauraum, dass die Masse der rotierenden Bauteile reduziert werden kann.

Vorzugsweise kann die Vorspanneinrichtung ein mit dem Gehäuse verschraubtes Schraubteil aufweisen, dessen dem äußeren Stützlager zugewandte Stirnfläche im gehäuseseitigen Lagersitz als axiale Stützfläche für das eine äußere Stützlager ausgebildet ist. Es genügt, an nur einer axialen Seite ein derartiges Schraubteil vorzusehen. Die andere axiale Stützfläche am gegenüberliegenden gehäuseseitigen Lagersitz für das andere äußere Stützlager kann fester Bestandteil des Gehäuses sein. Das Schraubteil kann als gleichachsig zu der Gewindespindel angeordneter Gewindering ausgebildet ist, der in eine gleichachsig zu der Gewindespindel angeordnete Gewindebohrung des Gehäuses geschraubt ist.

Alternativ zu einem Schraubteil kann es ausreichend sein, einen Ausgleichring in das Gehäuse einzusetzen, dessen Stirnfläche im gehäuseseitigen Lagersitz als axiale Stützfläche für das eine äußere Stützlager ausgebildet ist. Je dicker der Ausgleichsring bemessen ist, desto geringer ist ein axiales Spiel des Planetenwälzgewindetriebes.

Zum Einstellen einer gewünschten axialen Vorspannung oder eines gewünschten axialen Spiels wird die Vorspanneinrichtung soweit zugestellt, bis ein entsprechendes Axialspiel zwischen dem Gehäuse und den Planetenrollen eingestellt ist. Im Fall des Schraubteils wird dieses in Richtung auf das eine äußere Stützlager zugestellt, bis zum Erreichen eines gewünschten Spiels oder einer Spielfreiheit zwischen dem Gehäuse und den Planetenrollen und anschließend in dieser Schraublage gesichert.

Der erfindungsgemäße Planetenwälzgewindetrieb eignet sich besonders für einen Aktuator einer Hinterachslenkung und auch einer Vorderachslenkung eines Kraftfahrzeuges. Dieser Aktuator ist mit einer Schubstange versehen, deren voneinander abgewandte Enden zum Anlenken von Hinterrädern des Kraftfahrzeuges ausgebildet sind. Die Gewindespindel kann in diesem Fall Teil der Schubstange sein, zwischen deren Enden die Gewindespindel ausgebildet ist. Die Schubstange kann zwei Schubstangenteile aufweisen, zwischen denen die Gewindespindel angeordnet und fest mit beiden Schubstangenteilen verbunden ist. Die voneinander abgewandten freien Enden der Schubstange sind aus dem Gehäuse des Aktuators herausgeführt und mit Lenkerköpfen versehen, die an den Radträgern der Hinterräder angreifen.

Vorzugsweise ist dieser Aktuator mit einem Elektromotor und mit einem Riementrieb versehen, dessen Zahnriemen ein Motorritzel des Elektromotors sowie die Antriebshülse umschlingt. In dem Aktuatorgehäuse können der Riementrieb mit dem Motorritzel sowie der Planetenwälzgewindetrieb angeordnet sein. Der Elektromotor kann außerhalb des Gehäuses angeordnet sein.

Nachstehend wird die Erfindung anhand eines in fünf Figuren dargestellten Ausführungsbeispiels näher erläutert. Es zeigen:
- Figur 1: einen Planetenwälzgewindetrieb im Längsschnitt,
- Figur 2: einen vergrößerten Ausschnitt der Figur 1,
- Figur 3: eine Variante einer Mutter des Planetenwälzgewindetriebes,
- Figur 4: einen Aktuator einer Hinterachslenkung eines Kraftfahrzeuges und
- Figur 5: einen Ausschnitt des Aktuators aus Figur 4.

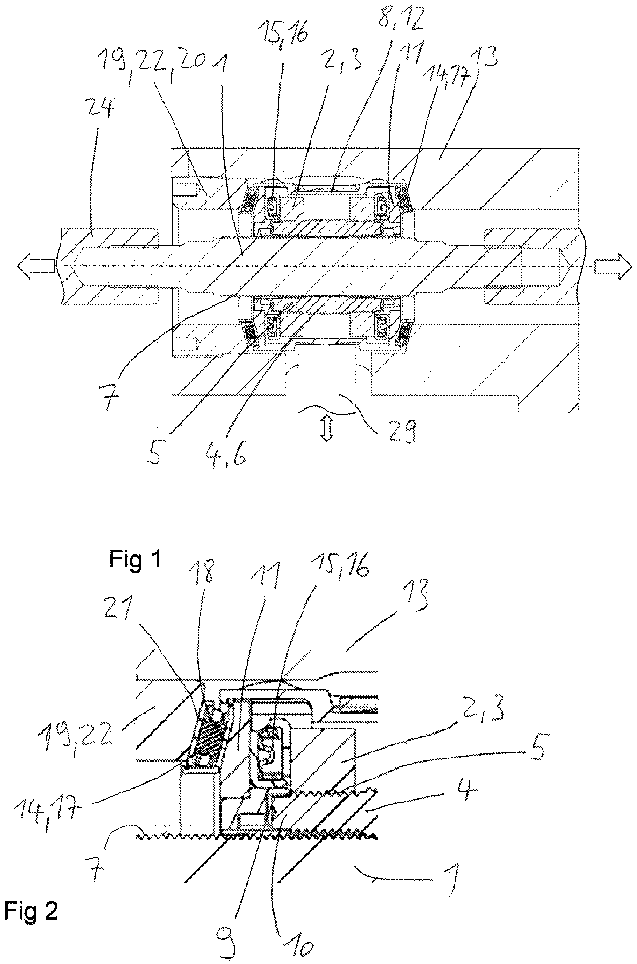

Der in den Figuren 1 und 2 abgebildete Planetenwälzgewindetrieb ist mit einer auf einer Gewindespindel 1 angeordneten Mutter 2 versehen. Die Mutter 2 ist in zwei axial hintereinander angeordnete Mutterteile 3 geteilt. Zwischen der Gewindespindel 1 und der Mutter 2 sind Planetenrollen 4 über den Umfang der Gewindespindel 1 verteilt angeordnet. Die Planetenrollen 4 kämmen mit ihren äußeren Rillenprofilen 5 mit den beiden Mutterteilen 3 und mit ihrem mittleren Rillenprofil 6 mit einem schraubenförmig um die Spindelachse gewundenen Gewindeprofil 7 der Gewindespindel 1. Das mittlere Rillenprofil 6 ist im Durchmesser größer als die benachbarten äußeren Rillenprofile 5. Die Gewindespindel 1 ist Teil einer Schubstange 24. Beide axiale Enden der Gewindespindel sind - lösbar oder unlösbar - fest mit Schubstangenteilen verbunden.

Der Planetenwälzgewindetrieb weist ferner einen Planetenrollenträger 8 auf, in dessen über den Umfang verteilt angeordneten Taschen 9 die Planetenrollen 4 um ihre Planetenrollenachse drehbar gelagert sind. Deutlich zeigt die Figur 2 an den axialen Enden der Planetenrollen 4 ausgebildete Lagerzapfen 10, die in den Taschen 9 des Planetenrollenträgers 8 eingreifen.

Der Planetenrollenträger 8 weist zwei axial voneinander beabstandet angeordnete Trägerflansche 11 sowie ein gleichachsig zu der Gewindespindel 1 angeordnetes, die Mutter 2 umgreifendes Antriebsrad 12 auf, das drehfest mit den beiden Trägerflanschen 11 verbunden ist. Die beiden Trägerflansche 11 sind axial verschieblich zueinander angeordnet. Beide Trägerflansch11 sind mittels eines Schiebesitzes mit dem Antriebsrad 12 drehfest aber axial verschieblich. Die beiden Trägerflansche 11 sind mit den Taschen 9 zur Aufnahme der Planetenrollen 4 versehen.

Der Planetenwälzgewindetrieb weist ein Gehäuse 13 auf, in dem der Planetenrollenträger 8 mittels äußerer Stützlager 14 drehbar gelagert ist. Beide Mutterteile 3 sind an ihren dem jeweiligen Trägerflansch 11 zugewandten Seite mittels innerer Stützlager 15 drehbar gelagert. Die inneren Stützlager 14 sind durch Axialwälzlager 16 gebildet. Die äußeren Stützlager 13 sind durch Schrägwälzlager 17 gebildet.

Die Trägerflansche 11 sind an ihren voneinander abgewandten Stirnseiten jeweils mit einer konusförmig ausgebildeten Stützfläche 18 für die zylindrischen Wälzkörper des Schrägwälzlagers 17 versehen. An ihren einander zugewandten Stirnseiten sind die Trägerflansche eben ausgebildet um die Axialwälzlager 16 abzustützen.

Ferner ist eine Vorspanneinrichtung 19 vorgesehen zum Einstellen einer axialen Vorspannung zwischen dem Gehäuse 13 und den Planetenrollen 4. Die Vorspanneinrichtung weist ein mit dem Gehäuse 13 verschraubtes Schraubteil 20 auf, dessen dem Schrägwälzlager 17 zugewandte Stirnfläche als gehäuseseitiger Lagersitz 21 des einen der äußeren Stützlagers ausgebildet ist. Das Schraubteil 20 ist als gleichachsig zu der Gewindespindel 1 angeordneter Gewindering 22 ausgebildet, der in eine Gewindebohrung 23 des Gehäuses 13 geschraubt ist.

Um das Lagerspiel aus der beschriebenen Lageranordnung herauszunehmen, wird der Gewindering 22 in Richtung auf das benachbarte Schrägwälzlager 17 durch eine schraubende Bewegung axial zugestellt. Unter dieser axialen Zustellbewegung wird der links in der Figur 1 abgebildete Trägerflansch 11 nach rechts gedrückt und nimmt das axiale Lagerspiel aus dem Axialwälzlager 16 heraus. Unter dem Eingriff der beiden Mutterteile 3 mit den Planetenrollen 4 wird demzufolge das rechts in der Figur 1 abgebildete Mutterteil 3 nach rechts in Richtung auf das Axialwälzlager 16 sowie auf das Schrägwälzlager 17, bis schließlich auch das axiale Lagerspiel aus diesen Lagern genommen ist. Der hier beschriebene Kraftfluß verläuft von links nach rechts gesehen von dem Gewindering 22 über das Schrägwälzlager 17, den Trägerflansch 11, das Axialwälzlager 16, das Mutterteil 3, die Planetenrollen 4, und von dort über das andere Mutterteil 3 über das andere Axialwälzlager 16, den anderen Trägerflansch 11, das andere Schrägwälzlager 17 schließlich in das Gehäuse 13.

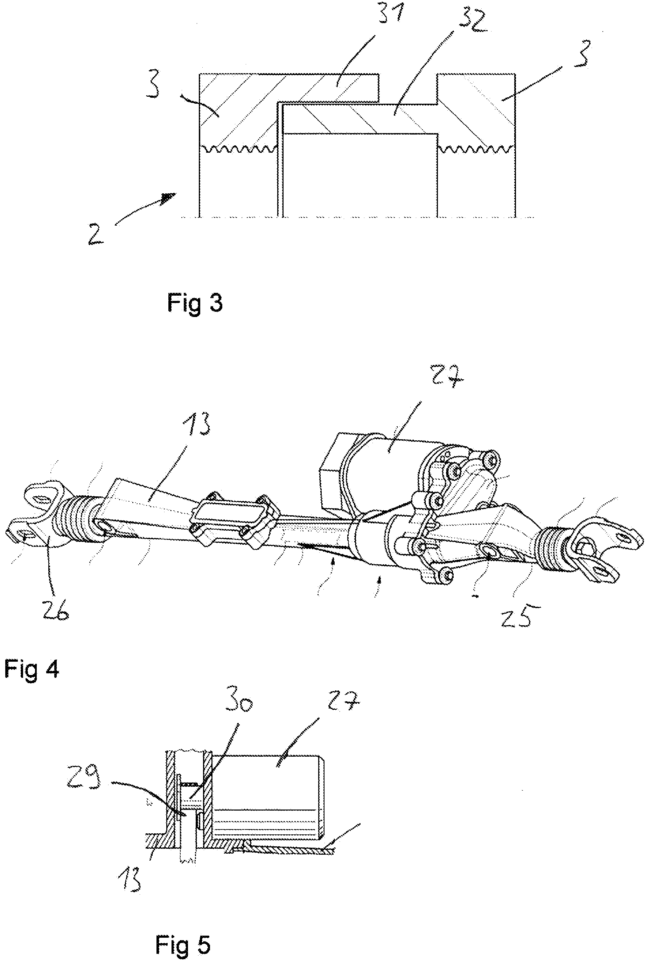

Figur 3 zeigt eine Variante der Mutter 2 mit hülsenförmigen Fortsätzen 31, 32, die an einander zugewandten Stirnseiten der beiden Mutterteile 3 vorgesehen sind und die ineinandergreifen und axial einander überlappen. Diese Fortsätze sind gleichachsig mit der Mutter 2 angeordnet, weisen jedoch unterschiedliche Durchmesser auf, die für eine Passung miteinander abgestimmt sind; die Mutterteile sind auf diese Weiseradial einwandfrei zueinander ausgerichtet. Zwischen den Fortsätzen 31, 32 ist demzufolge ein lediglich geringes radiales Spiel ausgebildet.

Die Figuren 4 und 5 zeigen einen Aktuator einer Hinterachslenkung eines Kraftfahrzeuges, mit dem oben beschriebenen Planetenwälzgewindetrieb. Das Gehäuse 13 weist links und rechts Gehäuseöffnungen 25 auf, durch die die Schubstange 24 beidseitig durchgeführt ist. In der Figur 4 ist die Schubstange ausserhalb des Gehäuses 13 durch Faltenbälge verdeckt. An ihren Enden ist die Schubstange 24 mit Lenkköpfen 26 versehen, an die nicht weiter abgebildete Radlenker angebunden sind.

Im Betrieb des Aktuators gewährleistet der spielfrei eingestellte Planetenwälzgewindetrieb bei Drehrichtungsumkehr des Planetenrollenträgers eine Umkehrbewegung der Schubstange 24 ohne dass ein axiales Spiel während dieser Umkehrbewegung abgebaut wird. Unter der Kraft der Vorspannung werden alle beteiligten Lagerkomponenten soweit angestellt, dass die Planetenrollen 4 in den Kontakt mit den Mutterteilen 3 gedrückt sind.

Der Aktuator weist einen Elektromotor 27 und einen Riementrieb 28 auf. Ein Zahnriemen 29 umschlingt ein Motorritzel 30 des Elektromotors 27 sowie das hier nicht abgebildete Antriebsrad 12.

### Bezugszahlenliste

- 1: Gewindespindel
- 2: Mutter
- 3: Mutterteile
- 4: Planetenrolle
- 5: äußeren Rillenprofilen
- 6: mittleren Rillenprofil
- 7: Gewindeprofil
- 8: Planetenrollenträger
- 9: Tasche
- 10: Lagerzapfen
- 11: Trägerflansche
- 12: Antriebsrad
- 13: Gehäuse
- 14: äußeres Stützlager
- 15: inneres Stützlager
- 16: Axialwälzlager
- 17: Schrägwälzlager
- 18: Laufbahn
- 19: Vorspanneinrichtung
- 20: Schraubteil
- 21: gehäuseseitiger Lagersitz
- 22: Gewindering
- 23: Gewindebohrung
- 24: Schubstange
- 25: Gehäuseöffnung
- 26: Lenkkopf
- 27: Elektromotor
- 28: Riementrieb
- 29: Zahnriemen
- 30: Motorritzel
- 31: Hülsenartiger Fortsatz
- 32: Hülsenartiger Fortsatz

## Patentansprüche

1. Planetenwälzgewindetrieb, mit einer auf einer Gewindespindel (1) angeordneten, quer zur Spindelachse in zwei Mutterteile (3) geteilten Mutter (2), und mit zwischen der Gewindespindel (1) und der Mutter (2) über den Umfang verteilt angeordneten Planetenrollen (3), die einerseits mit den Mutterteilen (3) und andererseits mit der Gewindespindel (1) kämmen, und mit einem auf der Gewindespindel (1) angeordneten drehangetriebenen Planetenrollenträger (8), in dessen über den Umfang verteilt angeordneten Taschen (9) die Planetenrollen (4) in Umfangsrichtung auf Abstand gehalten und um ihre Planetenrollenachse drehbar gelagert sind, und mit einem Gehäuse (13), in dem der Planetenrollenträger (8) drehbar gelagert ist, **dadurch gekennzeichnet, dass** eine Vorspanneinrichtung (19) vorgesehen ist zum Einstellen einer axialen Vorspannung zwischen dem Gehäuse (13) und den Planetenrollen (4).

2. Planetenwälzgewindetrieb nach Anspruch 1,dessen Planetenrollen (4) jeweils ein mittleres Rillenprofil (6) aufweisen, das mit einem Gewindeprofil (7) der Gewindespindel (1) kämmt, und die jeweils zu beiden Seiten des mittleren Rillenprofils (6) gelegene äußere Rillenprofile (5) aufweisen, deren eines äußeres Rillenprofil (5) mit dem einen Mutterteil (3) und deren anderes äußeres Rillenprofil (5) mit dem anderen Mutterteil (3) kämmt.

3. Planetenwälzgewindetrieb nach Anspruch 1 oder 2, dessen Planetenrollenträger (8) zwei axial voneinander beabstandet angeordnete Trägerflansche (11) sowie ein gleichachsig zu der Gewindespindel (1) angeordnetes, die Mutter (2) umgreifendes Antriebsrad (12) aufweist, das drehfest mit den beiden Trägerflanschen (11) verbunden ist, wobei die beiden Trägerflansche (11) axial verschieblich zueinander angeordnet und mit den Taschen (9) zur Aufnahme der Planetenrollen (4) versehen sind.

4. Planetenwälzgewindetrieb nach einem der Ansprüche 1 bis 3, dessen Planetenrollenträger (8) mittels innerer Stützlager (15) und äußerer Stützlager (14) gelagert ist, deren eines äußere Stützlager (14) zwischen dem einen Mutterteil (3) und dem Gehäuse (13) und deren anderes äußere Stützlager (14) zwischen dem anderen Mutterteil (3) und dem Gehäuse (13) angeordnet ist, und deren eines innere Stützlager (15) zwischen dem einen Mutterteil (3) und dem einen Trägerflansch (11) und deren anderes innere Stützlager (15) zwischen dem anderen Mutterteil (3) und dem anderen Trägerflansch (11) angeordnet ist.

5. Planetenwälzgewindetrieb nach Anspruch 4, dessen innere Stützlager (15) durch Axialwälzlager (16) und dessen äußere Stützlager (14) durch Schrägwälzlager (17) gebildet sind.

6. Planetenwälzgewindetrieb nach den Ansprüchen 3 und 5, dessen Trägerflansche (11) an ihren einander abgewandten Stirnseiten jeweils mit einer konusförmig ausgebildeten Stützfläche (18) das Schrägwälzlager (17) versehen sind.

7. Planetenwälzgewindetrieb nach einem der Ansprüche 1 bis 6, dessen Vorspanneinrichtung (19) ein mit dem Gehäuse (13) verschraubtes Schraubteil (20) aufweist, dessen dem Schrägwälzlager (17) zugewandte Stirnfläche als gehäuseseitiger Lagersitz (21) eines der äußeren Stützlager (14) ausgebildet ist.

8. Planetenwälzgewindetrieb nach Anspruch 7, dessen Schraubteil (20) als gleichachsig zu der Gewindespindel (1) angeordneter Gewindering (22) ausgebildet ist, der in eine Gewindebohrung (23) des Gehäuses (13) geschraubt ist.

9. Aktuator einer Hinterachslenkung eines Kraftfahrzeuges, mit einem Planetenwälzgewindetrieb nach wenigstens einem der Ansprüche 1 bis 8, in dessen Gehäuse (13) eine Schubstange (24) längsverschieblich geführt und an ihren Gehäuseöffnungen (25) des Gehäuses (13) durchgreifenden Enden mit Lenkköpfen (26) versehen ist, wobei die Gewindespindel (1) Teil der Schubstange (24) ist.

10. Verfahren zum Einstellen einer Vorspannung eines Planetenwälzgewindetriebes gemäß einem der Ansprüche 1 bis 8, nach den folgenden Schritten: Der Planetenwälzgewindetrieb wird in das Gehäuse (13) eingesetzt, die Vorspanneinrichtung (19) wird soweit zugestellt, bis ein Axialspiel zwischen dem Gehäuse (13) und den Planetenrollen (4) eingestellt ist.

## Claims

1. A planetary roller screw, having a nut (2) arranged on a threaded spindle (1) and divided into two nut parts (3) transversely to the spindle axis, and having planetary rollers (4) distributed over the circumference between the threaded spindle (1) and the nut (2), which mesh on the one hand with the nut parts (3) and on the other hand with the threaded spindle (1), and having a rotationally driven planetary roller carrier (8) arranged on the threaded spindle (1), in whose pockets (9) arranged over the circumference the planetary rollers (4) are kept at a distance in the circumferential direction and are rotatably mounted about their planetary roller axis, and having a housing (13), in which the planetary roller carrier (8) is rotatably mounted, **characterised in that** a pretensioning device (19) is provided for adjusting an axial pretension between the housing (13) and the planetary rollers (4).

2. The planetary roller screw according to claim 1, whose planetary rollers (4) each have a central groove profile (6) which meshes with a thread profile (7) of the threaded spindle (1), and which have outer groove profiles (5) located on both sides of the central groove profile (6), one outer groove profile (5) of which meshes with one nut part (3) and the other outer groove profile (5) of which meshes with the other nut part (3).

3. The planetary roller screw according to claim 1 or 2, whose planetary roller carrier (8) has two carrier flanges (11) arranged axially spaced apart from one another and a drive wheel (12) arranged coaxially with the threaded spindle (1) and encompassing the nut (2), which drive wheel is rotationally fixed to the two carrier flanges (11), wherein the two carrier flanges (11) are arranged to be axially displaceable relative to one another and provided with pockets (9) for receiving the planetary rollers (4).

4. The planetary roller screw according to one of claims 1 to 3, the planetary roller carrier (8) of which is mounted by means of inner support bearings (15) and outer support bearings (14), one outer support bearing (14) of which is arranged between one nut part (3) and the housing (13) and the other outer support bearing (14) of which is arranged between the other nut part (3) and the housing (13), and one inner support bearing (15) of which is arranged between the one nut part (3) and the one carrier flange (11) and the other inner support bearing (15) of which is arranged between the other nut part (3) and the other carrier flange (11).

5. The planetary roller screw according to claim 4, whose inner support bearings (15) are formed by axial roller bearings (16) and whose outer support bearings (14) are formed by angular roller bearings (17).

6. The planetary roller screw according to claims 3 and 5, the carrier flanges (11) of which are each provided with a conical support surface (18) for the angular roller bearing (17) on their opposite end faces.

7. The planetary roller screw according to one of claims 1 to 6, the pretensioning device (19) of which has a screw part (20) screwed to the housing (13), the end face of which facing the angular roller bearing (17) is designed as a housing-side bearing seat (21) of one of the outer support bearings (14).

8. The planetary roller screw according to claim 7, the screw part (20) of which is designed as a threaded ring (22) arranged coaxially with the threaded spindle (1), which is screwed into a threaded bore (23) in the housing (13).

9. An actuator of a rear axle steering of a motor vehicle, having a planetary roller screw according to at least one of claims 1 to 8, in the housing (13) of which a push rod (24) is guided in a longitudinally displaceable manner and provided with steering heads (26) at its ends passing through housing openings (25) of the housing (13), wherein the threaded spindle (1) is part of the push rod (24).

10. A method for adjusting a pretensioning of a planetary roller screw according to one of claims 1 to 8, according to the following steps: The planetary roller screw is inserted into the housing (13), the pretensioning device (19) is advanced until an axial play is set between the housing (13) and the planetary rollers (4).

## Revendications

1. Vis à rouleaux satellites, comportant un écrou (2) agencé sur une broche filetée (1) et divisé en deux parties d'écrou (3) transversalement à l'axe de la broche, et comportant des rouleaux satellites (4) répartis sur la circonférence entre la broche filetée (1) et l'écrou (2), qui s'engrènent d'une part avec les parties d'écrou (3) et d'autre part avec la broche filetée (1), et comportant un support de rouleaux satellites (8) entraîné en rotation agencé sur la broche filetée (1), dans les poches (9) réparties sur la circonférence duquel les rouleaux satellites (4) sont maintenus à distance dans la direction circonférentielle et sont montés rotatifs autour de leur axe de rouleau satellite, et comportant un boîtier (13) dans lequel le support de rouleaux satellites (8) est monté rotatif, **caractérisé en ce qu'**un dispositif de précontrainte (19) est prévu pour régler une précontrainte axiale entre le boîtier (13) et les rouleaux satellites (4).

2. Vis à rouleaux satellites selon la revendication 1, dont les rouleaux satellites (4) présentent chacun un profil de rainure central (6) qui s'engrène avec un profil de filetage (7) de la broche filetée (1), et présentent des profils de rainure extérieurs (5) situés respectivement de part et d'autre du profil de rainure central (6), dont un profil de rainure extérieur (5) s'engrène avec une partie d'écrou (3) et dont l'autre profil de rainure extérieur (5) s'engrène avec l'autre partie d'écrou (3).

3. Vis à rouleaux satellites selon la revendication 1 ou 2, dont le support de rouleaux satellites (8) présente deux flasques de support (11) agencés à distance axiale l'un de l'autre et une roue d'entraînement (12) agencée coaxialement à la broche filetée (1) et englobant l'écrou (2), qui est reliée fixe en rotation aux deux flasques de support (11), les deux flasques de support (11) étant agencés pour être déplaçables axialement l'un par rapport à l'autre et étant dotés des poches (9) pour recevoir le rouleaux satellites (4).

4. Vis à rouleaux satellites selon l'une quelconque des revendications 1 à 3, dont le support de rouleaux satellites (8) est monté au moyen de paliers d'appui intérieurs (15) et de paliers d'appui extérieurs (14), dont un palier d'appui extérieur (14) est agencé entre la partie d'écrou (3) et le boîtier (13) et l'autre palier d'appui extérieur (14) est agencé entre l'autre partie d'écrou (3) et le boîtier (13), et dont un palier d'appui intérieur (15) est agencé entre la première partie d'écrou (3) et le premier flasque de support (11) et l'autre palier d'appui intérieur (15) est agencé entre l'autre partie d'écrou (3) et l'autre flasque de support (11).

5. Vis à rouleaux satellites selon la revendication 4, dont les paliers d'appui intérieurs (15) sont formés par des roulements axiaux (16) et dont les paliers d'appui extérieurs (14) sont formés par des roulements à contact oblique (17).

6. Vis à rouleaux satellites selon les revendications 3 et 5, dont les flasques de support (11) sont dotés chacun d'une surface d'appui conçue conique (18) pour le roulement à contact oblique (17) sur leurs faces frontales opposées l'une à l'autre.

7. Vis à rouleaux satellites selon l'une quelconque des revendications 1 à 6, dont le dispositif de précontrainte (19) présente une partie de vis (20) vissée au boîtier (13), dont la face frontale tournée vers le roulement à contact oblique (17) est conçue comme siège de palier (21) côté boîtier de l'un des paliers d'appui extérieurs (14).

8. Vis à rouleaux satellites selon la revendication 7, dont la partie de vis (20) est conçue comme une bague filetée (22) agencée coaxialement à la broche filetée (1), qui est vissée dans un alésage fileté (23) du boîtier (13).

9. Actionneur d'une direction d'essieu arrière d'un véhicule automobile, comportant une vis à rouleaux satellites selon au moins l'une quelconque des revendications 1 à 8, dans le boîtier (13) duquel une tige de poussée (24) est guidée de manière déplaçable longitudinalement et qui est pourvu de têtes de direction (26) au niveau de ses extrémités traversant des ouvertures de boîtier (25) du boîtier (13), la broche filetée (1) faisant partie de la tige de poussée (24).

10. Procédé de réglage d'une précontrainte d'une vis à rouleaux satellites selon l'une quelconque des revendications 1 à 8, selon les étapes suivantes : la vis à rouleaux satellites est insérée dans le boîtier (13), le dispositif de précontrainte (19) est avancé jusqu'à ce qu'un jeu axial soit réglé entre le boîtier (13) et les rouleaux satellites (4).
